# EUROPÄISCHE PATENTSCHRIFT

(11) **EP 2 350 162 B1**
(45) Veröffentlichungstag und Bekanntmachung des Hinweises auf die Patenterteilung: **15.11.2017**
(21) Anmeldenummer: 09783285.1
(22) Anmeldetag: 22.09.2009
(51) Int. Cl.: C08K 3/00, C08K 5/00, C08L 67/00, C08L 67/02, C08L 67/04, C08L 69/00, C08G 63/16, C08G 63/20, C08G 63/91

(54) **ALIPHATISCHE POLYESTER**
ALIPHATIC POLYESTERS
POLYESTERS ALIPHATIQUES

(30) Priorität: 29.09.2008 EP 08165370
(43) Veröffentlichungstag der Anmeldung: 03.08.2011
(73) Patentinhaber: BASF SE, 67056 Ludwigshafen am Rhein (DE)
(72) Erfinder: SIEGENTHALER, Kai Oliver, 68163 Mannheim (DE); FÜSSL, Andreas, 69120 Heidelberg (DE); SKUPIN, Gabriel, 67346 Speyer (DE); YAMAMOTO, Motonori, 68199 Mannheim (DE)
(74) Vertreter: BASF IP Association
(86) Internationale Anmeldenummer: PCT/EP2009/062261
(87) Internationale Veröffentlichungsnummer: WO 2010/034711

(56) Entgegenhaltungen:
- EP-A1- 0 647 668
- DE-A1-102005 053 068

## Beschreibung

Die vorliegende Erfindung betrifft Copolymere erhältlich durch Kondensation von
i) 92 bis 98 mol %, bezogen auf die Komponenten i bis ii, Bernsteinsäure;
ii) 2 bis 8 mol %, bezogen auf die Komponenten i bis ii, Azelainsäure, Sebacinsäure und/oder Brassylsäure
iii) 98 bis 102 mol %, bezogen auf die Komponenten i bis ii, 1,3-Propandiol oder 1,4-Butandiol und
iv) 0,01 bis 5 Gew.-%, bezogen auf das Gesamtgewicht der Komponenten i bis iii, eines Vernetzers iva ausgewählt aus der Gruppe bestehend aus: Weinsäure, Zitronenesäure, Apfelsäure, Trimethylolpropan, Trimethylolethan, Pentaerythrit, Polyethertriole, Glycerin, Trimesinsäure, Trimellitsäure, Trimellitsäureanhydrid, Promellitsäure und Pyromellitsäureanhydrid und/oder Kettenverlängerers ivb ausgewählt aus der Gruppe bestehend aus: einem difunktionellen Isocyanat, Isocyanurat, Oxazolin und Epoxid.

Des Weiteren betrifft die Erfindung ein Verfahren zur Herstellung der Copolymere, Polymermischungen enthaltend diese Copolymere sowie die Verwendung dieser Copolymere.

Polybutylensuccinat (PBS) kann insbesondere im Hinblick auf die biologische Abbaubarkeit und die Hydrolysebeständigkeit nicht immer überzeugen.

Aus der EP-A 565 235 und EP-A 647 668 sind aliphatische Copolyester auf Basis von Bernsteinsäure und Sebacinsäure bekannt. Allerdings weisen diese einen deutlich höheren Sebacinsäuregehalt als die erfindungsgemäßen Copolyester auf. Für den Spritzguss ist dieses Polymer aufgrund der gegenüber PBS stark verringerten Steifigkeit, der beeinträchtigten Wärmeformbeständigkeit und der niedrigeren Kristallisationsgeschwindigkeit und einer damit verbundenen erhöhten Zykluszeit nicht so gut geeignet.

Ziel der vorliegenden Erfindung war es, einen aliphatischen Polyester bereitzustellen, der sich im Spritzguss gut verarbeiten lässt. Ferner sollten die spritzgegossenen Formteile gute mechanische Eigenschaften und im Vergleich zum PBS eine verbesserte biologische Abbaubarkeit aufweisen.

Mit den erfindungsgemäßen Copolymeren lässt sich dieses Ziel überraschend einfach erreichen.

Die Synthese der beschriebenen Copolyester erfolgt in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat hohen Molekulargewichts umgesetzt. Als Katalysatoren werden üblicherweise Zink-, Aluminium- und insbesondere Titankatalysatoren eingesetzt. Titankatalysatoren wie Tetra(isopropyl)orthotitanat und insbesondere Tetra(butyl)orthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Ein Gemisch der Dicarbonsäuren wird in Anwesenheit eines Überschusses an Diol zusammen mit dem Katalysator in der Regel zunächst während eines Zeitraumes von etwa 60-180 min auf eine Innentemperatur von 170 bis 230 °C erhitzt und entstehendes Wasser abdestilliert. Anschließend wird die Schmelze des so erhaltenen Präpolyesters üblicherweise bei einer Innentemperatur von 200 zu 250 °C innerhalb von 3 bis 6 Stunden bei vermindertem Druck unter Abdestillieren freiwerdenden Diols bis zur gewünschten Viskosität mit einer Viskositätszahl (VZ) von 100 bis 450 mL/g und vorzugsweise 120 bis 250 mL/g kondensiert.

Die erfindungsgemäßen Copolymere lassen sich darüber hinaus nach den in WO 96/15173 und EP-A 488 617 beschriebenen Verfahren herstellen. Als vorteilhaft hat es sich erwiesen, zunächst die Komponenten i) bis iii) zu einem Präpolyester mit einer VZ von 50 bis 100 mL/g, vorzugsweise 60 bis 90 mL/g umzusetzen und diesen anschließend mit Kettenverlängerern vib), beispielsweise mit Diisocyanaten oder mit epoxidhaltigen Palymethacrylaten in einer Kettenverlängerungsreaktion zu einem Polyester mit einer VZ von 100 bis 450 mL/g, vorzugsweise 120 bis 250 mL/g umzusetzen.

Als Säurekomponente i werden bezogen auf die Säurekomponenten i und ii, 92 bis 98 mol% Bernsteinsäure eingesetzt. Bernsteinsäure ist auf petrochemischem Weg sowie vorzugsweise aus nachwachsenden Rohstoffen wie beispielsweise in PCT/EP2008/006714 beschrieben zugänglich. PCT/EP2008/006714 offenbart ein biotechnologisches Verfahren zur Herstellung von Bernsteinsäure und 1,4-Butandiol ausgehend von unterschiedlichen Kohlehydraten mit Mikroorganismen aus der Klasse der *Pasteurellaceae.*

Säurekomponente ii betrifft Azelainsäure, Sebacinsäure und/oder Brassylsäure. Insbesondere bevorzugt ist Sebacinsäure. Säurekomponente ii wird 2 bis 8 mol% bezogen auf die Säurekomponenten i und ii, eingesetzt. Sebacinsäure ist aus nachwachsenden Rohstoffen, insbesondere aus Rizinusöl zugänglich. Azelainsäure und Brassylsäure sind z.B. ausgehend von Pflanzenölen gemäß WO 2008/138892 A1 zugänglich. Derartige Polyester zeichnen sich durch ein exzellentes biologisches Abbauverhalten aus [Literatur: Polym. Degr. Staub. 2004, 85, 855-863].

Bernstein- und Sebacinsäure können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch eingesetzt werden.

Die Diole 1,3-Propandiol und 1,4-Butandiol sind ebenfalls aus nachwachsenden Rohstoffen zugänglich. Es können auch Mischungen der beiden Diole verwendet werden. Aufgrund der höheren Schmelztemperaturen und der besseren Kristallisation des gebildeten Copolymers ist 1,4-Butandiol als Diol bevorzugt.

In der Regel wird zu Beginn der Polymerisation das Diol (Komponente iii) zu den Säuren (Komponenten i und ii) in einem Verhältnis von Diol zu Disäuren von 1,0 bis 2,5 : 1 und vorzugsweise 1,3 bis 2,2 : 1 eingestellt. Überschüssige Diolmengen werden während der Polykondensation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,02 verstanden.

Die genannten Copolymere können Hydroxy- und/oder Carboxylend-gruppen in jedem beliebigen Verhältnis aufweisen. Die genannten aliphatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Copolymere mit niedrigen Säurezahlen sind bevorzugt.

In der Regel werden 0,01 bis 5 Gew.-%, vorzugsweise 0,02 bis 3 Gew.-% und insbesondere bevorzugt 0,055 bis 2 Gew.-% bezogen auf das Gesamtgewicht der Komponenten i bis iii, eines Vernetzers iva und/oder Kettenverlängerers ivb ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. Als Kettenverlängerer ivb kommen polyfunktionelle und insbesondere difunktionelle Isocyanate, Isocyanurate, Oxazoline oder Epoxide in Frage. Die Vernetzer iva) werden in der Regel in einer Konzentration von 0,01 bis 5 Gew.-%, vorzugsweise 0,02 bis 1 Gew.-% und insbesondere bevorzugt 0,05 bis 0,5 Gew.-% bezogen auf das Gesamtgewicht der Komponenten i bis iii eingesetzt. Die Kettenverlängerer ivb) werden im Allgemeinen in einer Konzentration von 0,01 bis 5 Gew.-%, vorzugsweise 0,2 bis 4 Gew.-% und insbesondere bevorzugt 0,35 bis 2 Gew.-% bezogen auf das Gesamtgewicht der Komponenten i bis iii eingesetzt.

Kettenverlängerer sowie Alkohole oder Carbonsäurederivate mit mindestens drei funktionellen Gruppen können auch als Vernetzer aufgefasst werden: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten iv lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen iv wirken scherentzähend, d.h. sie verstärken die Strukturviskosität des Polymeren. Die Viskosität unter Belastung wird geringer.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist beispielsweise Joncryl® ADR 4368.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich die folgenden Verbindungen:
Unter einem aromatischen Diisocyanat d1 werden vor allem Toluylen-2,4-diisocyanat, Toluylen-2,6-diisacyanat, 2,2'-Diphenylmethandiisocyanat, 2,4'-Diphenylmethan-diisocyanat, 4,4'-Diphenylmethan-diisocyanat, Naphthylen-1,5-diisocyanat oder Xylylen-diisocyanat verstanden. Darunter werden 2,2'-, 2,4'- sowie 4,4'-Diphenylmethan-diisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Urethiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

2,2'-Bisoxazoline sind im allgemeinen erhältlich durch das Verfahren aus Angew. Chem. Int. Ed., Vol. 11 (1972), S. 287-288. Besonders bevorzugte Bisoxazoline sind solche, in denen R¹ eine Einfachbindung, eine (CH₂)-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-xazalinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazalinyl)benzol, 1,2-Bis(2-oxazolinyl)benzol oder 1,3-Bis(2-xazolinyl)benzol genannt.

Die Verbindungen iv werden vorzugsweise in Mengen von 0,01 bis 5, bevorzugt 0,05 bis 2, besonders bevorzugt 0,08 bis 1 Gew.-%, bezogen auf die Polymermenge eingesetzt.

Die bevorzugten Copolymere weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 g/mL (gemessen in o-Dichlorbenzol/Phenol (Gewichtsverhältnis 50/50). Der Schmelzpunkt liegt im Bereich von 85 bis 130, bevorzugt im Bereich von 95 bis 120°C.

Die Viskositätszahl (VZ) der gebildeten Copolymere liegt bei 100 bis 450 mL/g, bevorzugt bei 110 bis 300 mL/g, und insbesondere bei 120 bis 250 mL/g.

In einer bevorzugten Ausführungsform werden 1 bis 80 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl, zerkleinertem Kork, gemahlenen Rinden, Nussschalen, gemahlene Presskuchen (Pflanzenölraffinerie), getrocknete Produktionsrückstände aus der Fermentation oder Destillation von Getränken wie z.B. Bier, gebrauten Limonaden, Wein oder Sake und/oder eines anorganischen Füllstoffs ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern.

Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).
Unter Naturfasern werden Cellulosefasern, Hanffasern, Sisal, Kenaf, Jute, Flax, Abacca, Kokosfaser oder auch Holzmehl verstanden.

Als bevorzugte faserförmige Füllstoffe seien Glasfasern, Kohlenstofffasern, AramidFasern, Kaliumtitanat-Fasern und Naturfasern genannt, wobei Glasfasern als E-Glas besonders bevorzugt sind. Diese können als Rovings oder insbesondere als Schnittglas in den handelsüblichen Formen eingesetzt werden. Diese Fasern weisen im Allgemeinen einen Durchmesser von 3 bis 30 µm, bevorzugt 6 bis 20 µm und besonderes bevorzugt von 8 bis 15 µm auf. Die Faserlänge im Compound beträgt in der Regel 20 µm bis 1000 µm, bevorzugt 180 bis 500 µm und besonderes bevorzugt 200 bis 400 µm.

Die Füllstoffe können zur besseren Verträglichkeit mit dem Thermoplasten zum Beispiel mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:

X NH₂-,

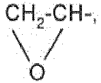

HO-,

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten oder Halosilane.

Die Silanverbindungen werden im allgemeinen in Mengen von 0,01 bis 2, vorzugsweise 0,025 bis 1,0 und insbesondere 0,05 bis 0,5 Gew.-% (bezogen auf C) zur Oberflächenbeschichtung eingesetzt.

Die erfindungsgemäßen biologisch abbaubaren Polyestermischungen können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Neutralisationsmittel; Gleit- und Trennmittel wie Stearate (insbesondere Calziumstearat); Weichmacher (Plastifizierer) wie beispielsweise Zitronensäureester (insbesondere Tributylcitrat und Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Copolymere eingesetzt. Weichmacher können in 0,1 bis 10 Gew.-% in den erfindungsgemäßen Copolymeren enthalten sein.

Die Herstellung der erfindungsgemäßen biologisch abbaubaren Copolymermischungen aus den einzelnen Komponenten kann nach bekannten Verfahren erfolgen (EP 792 309 und US 5,883,199). Beispielsweise können alle Mischungspartner in einem Verfahrensschritt in dem Fachmann bekannten Mischvorrichtungen, beispielsweise Knetern oder Extrudern (insbesondere zwei- und mehrwellige Extruder) bei erhöhten Temperaturen, beispielsweise von 120°C bis 300°C, vorzugsweise 150°C bis 250°C gemischt und zur Reaktion gebracht werden.

Typische Copolymermischungen enthalten: 5 bis 95 Gew.- %, vorzugsweise 20 bis 80 Gew.-%, insbesondere bevorzugt 40 bis 75 Gew.-% eines erfindungsgemäßen Copolymers und
95 bis 5 Gew.-%, vorzugsweise 80 bis 20 Gew.-%, insbesondere bevorzugt 60 bis 40 Gew.-% eines Polymers ausgewählt aus der Gruppe bestehend aus: Polymilchsäure, Polycaprolacton, Polyhydroxyalkanoat, aliphatischem Polycarbonat, Chitosan und Gluten und/oder eines Polyesters auf Basis von aliphatischen Diolen und aliphatisch/aromatischen Dicarbonsäuren wie Polybutylensuccinat (PBS), Polybutylensuccinat-adipat (PBSA), Polybutylenadipat-co-terephthalat (PBAT).

Vorzugsweise enthalten die Copolymermischungen ihrerseits 0,05 bis 2 Gew.-% eines Verträglichkeitsvermittlers. Bevorzugte Verträglichkeitsvermittler sind Carbonsäureanhydride wie Maleinsäureanhydrid und insbesondere die zuvor beschriebenen epoxidgruppen-haltige Copolymere auf Basis Styrol, Acrylsäureester und/oder Methacrylsäureester. Die Epoxidgruppen tragenden Einheiten sind vorzugsweise Glycidyl(meth)-acrylate. Epoxidgruppen-haltige Copolymere des obengenannten Typs werden beispielsweise von der BASF Resins B.V. unter der Marke Joncryl® ADR vertrieben. Als Verträglichkeitsvermittler besonders geeignet ist beispielsweise Joncryl® ADR 4368.

Als biologisch abbaubaren Polyester ist beispielsweise Polymilchsäure geeignet. Polymilchsäure mit dem folgenden Eigenschaftsprofil wird bevorzugt eingesetzt:
- einer Schmelzvolumenrate (MVR bei 190°C und 2.16 kg nach ISO 1133 von 0.5 - vorzugsweise 2 - bis 30 ml/10 Minuten
- einem Schmelzpunkt unter 175°C;
- einem Glaspunkt (Tg) größer 55°C
- einem Wassergehalt von kleiner 1000 ppm
- einem Monomeren-Restgehalt (L-Lactid) von kleiner 0.3%.
- einem Molekulargewicht von größer 80 000 Dalton.

Bevorzugte Polymilchsäuren sind beispielsweise NatureWorks® 3001, 3051, 3251, 4032 oder 4042D (Polylmilchsäuren der Fa. NatureWorks oder NL-Naarden und USA Blair/Nebraska)).

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten umfasst. Poly-4-hydroxybutyrate sind insbesondere von der Fa. Metabolix bekannt. Sie werden unter dem Handelsnamen Mirel® vertrieben. Poly-3-hydroxybutyrate werden beispielsweise von der Fa. PHB Industrial unter dem Markennamen Biocycle® und von der Fa. Tianan unter dem Namen Enmat® vertrieben.

Die Polyhydroxyalkanoate weisen in der Regel ein Molekulargewicht M_{w} von 100.000 bis 1.000.000 und vorzugsweise von 300.000 bis 600.000 auf.

Unter teilaromatischen Polyestern auf Basis von aliphatischen Diolen und aliphatisch/aromatischen Dicarbonsäuren werden auch Polyesterderivate verstanden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schritten WO 96/15173 bis 15176, 21689 bis 21692, 25446, 25448 oder der WO 98/12242 bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex® (BASF Aktiengesellschaft), Eastar® Bio und Origo-Bil® (Novamont) zu verstehen.

Polycaprolacton wird von der Fa. Daicel unter dem Produktnamen Placcel® vermarktet.

Unter aliphatischen Polycarbonaten werden insbesondere Polyethylencarbonat und Polypropylencarbonat verstanden.

Die erfindungsgemäßen Copolymere und Copolymermischungen weisen im Vergleich zu PBS eine höhere biologische Abbaubarkeit auf.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 nach den vorgeschriebenen Zeiträumen einen prozentualen Grad des biologischen Abbaus von mindestens 90% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 Bezug nehmend auf ISO 14855 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die erfindungsgemäßen Copolymere sind zur Herstellung von Klebern, Dispersionen, Formkörpern, extrudierten Schäumen, Partikelschäumen, Folien und Folienbändchen für Netze und Gewebe, Schlauchfolien, Chill-Roll-Folien mit und ohne einer Orientierung in einem weiteren Verfahrensschritt, mit und ohne Metallisierung oder Siox-Beschichtung geeignet. Unter Formkörpern sind insbesondere Formkörper mit Wandstärken größer 200 µm zu verstehen, die mit den Formgebungsverfahren wie Spritzguss, Spritzblasformen, Extrusion/thermoformen, Extrusionsblasformen und Kalendrieren/Thermoformen hergestellt werden können.

Die Bauteile aus den erfindungsgemäßen Copolymeren weisen verglichen mit denjenigen aus PBS eine gute biologische Abbaubarkeit auf. Interessante Anwendungsgebiete sind daher: Cateringbesteck, Teller, Pflanzentöpfe, Tiegel, wiederbefüllbare Behälter und Verschlüsse für Non-Food Anwendungen wie Detergentien oder Agrarprodukte und Food-Anwendungen, extrusionsgeblasene oder spritz-streckgeblasene Formteilen wie Flaschen, Folienanwendungen für Inliner, Schwergutsäcke, Tragetaschen, Gefrierbeutel, Getränkeflaschen, Flaschen für sonstige Inhalte, Schraubdeckelgefäße für Kosmetika, etc.

### Beispiele:

### Anwendungstechnische Messungen:

Das Molekulargewicht Mₙ der teilaromatischen Polyester wurde wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000. Außerhalb dieses Intervalls liegende Elutionsbereiche wurden durch Extrapolation bestimmt.

Die Bestimmung der Viskositätszahlen erfolgte nach DIN 53728 Teil 3, 3. Januar 1985. Als Lösungsmittel wurde das Gemisch: Phenol/o-Dichiorbenzol im Gewichtsverhältnis 50/50 verwendet.

Die Schmelztemperaturen der teilaromatischen Polyester wurden durch DSC Messungen mit einem Gerät Exstet DSC 6200R der Fa. Seiko bestimmt:
10 bis 15 mg der jeweiligen Proben wurden unter einer Stickstoffatmosphäre mit einer Aufheizrate von 20°C/min von -70°C auf 200°C aufgeheizt. Als Schmelztemperaturen der Proben wurden die Peaktemperaturen des dabei beobachteten Schmelzpeaks angegeben. Als Referenz wurde jeweils ein leerer Probentiegel verwendet.

Die Abbauraten der biologisch abbaubaren Polyestermischungen und der zum Vergleich hergestellten Mischungen wurden wie folgt beurteilt:
Aus den biologisch abbaubaren Polyestermischungen und den zum Vergleich hergestellten Mischungen wurden durch Pressen bei 190°C jeweils Folien mit einer Dicke von etwa 30 µm hergestellt. Diese Folien wurden jeweils in rechteckige Stücke mit Kantenlängen von 2 cm x 5 cm geschnitten. Das Gewicht dieser Folienstücke wurde bestimmt. Über einen Zeitraum von vier Wochen wurden die Folienstücke in einem Trockenschrank in einer mit befeuchteter Komposterde gefüllten Kunststoffdose auf 58°C erhitzt. Im Wochenabstand wurde jeweils das verbleibende Gewicht der Folienstücke bestimmt. Unter der Annahme, dass die biologische Abbaubarkeit in diesen Fällen als reiner Oberflächenprozess betrachtet werden kann, wurde zur Bestimmung der Steigung der erhaltenen Gewichtsabnahme (Geschwindigkeit des Bioabbaus) die Differenz aus dem nach einer Probennahme gemessenen Gewicht und der Masse der Folie vor Versuchsbeginn abzüglich der durchschnittlichen Gesamtgewichtsabnahme bis zur vorhergehenden Probenentnahme errechnet. Die erhaltene Massenreduktion wurde darüber hinaus auf die Oberfläche (in cm²) wie auch die Zeit zwischen aktueller und vorhergehender Probennahme (in d) normiert.

Die VICAT Erweichungstemperatur (Vicat A) wurde gemäß ISO 306 : 2004 an Probekörpern mit einer Dicke von 0.4 mm bestimmt.

Der E-Modul, die Streckspannung und die Reißdehnung wurden mittels eines Zugversuchs an Pressfolien mit einer Dicke von etwa 420 µm gemäß ISO 527-3: 2003 bestimmt.

In einem Puncture Resistance Test an Preßfolien mit einer Dicke von 420 µm wurde die maximale Kraft und die Brucharbeit der Polyester gemessen:
Bei der verwendeten Prüfmaschine handelt es sich um ein Zwick 1120 ausgerüstet mit einem kugelförmigen Stempel mit einem Durchmesser von 2,5 mm. Die Probe, ein kreisförmiges Stück der zu vermessenden Folie, wurde senkrecht zum Prüfstempel eingespannt und dieser mit einer konstanten Prüfgeschwindigkeit von 50 mm/min durch die Ebene, die durch die Einspannvorrichtung aufgespannt wird, hindurchgefahren. Während des Versuchs wurde sowohl die Kraft wie auch die Dehnung aufgezeichnet und so die Durchstoßarbeit bestimmt.

### Beispiele

### Beispiel 1 (PBS, Vergleichsbeispiel):

Zunächst wurde ein Gemisch aus Butandiol (93,7 g, 130 mol-%), Bernsteinsäure (94,5 g, 100 mol-%) und Glycerin 0,2 g (0,1 Gew.-%) in Anwesenheit von TBOT (0.2 g) auf 200°C erhitzt und während 30 min wurde das entstehende Wasser abdestilliert. Dieser Präpolyester wurde anschließend bei vermindertem Druck (< 5 mbar) zum hochmolekularen Polyester umgesetzt. Dazu wurde bis zu einer Temperatur von 250°C 1,4-Butandiol abdestilliert. Der erhaltene Polyester wies eine VZ von 171 mL/g auf.

### Beispiel 2: (PBSSe (S : Se = 98 : 2)):

Ein Gemisch aus Butandiol (70,0 g, 130 mol-%), Bernsteinsäure (69,2 g, 98 mol-%), Sebacinsäure (2,4 g, 2 mol%) und Glycerin (0,14 g, 0,1 Gew.-%) wurde in Anwesenheit von TBOT (0.09 mL) zunächst auf 200°C erhitzt. Die Schmelze wurde während 80 min auf dieser Temperatur gehalten und Wasser abdestilliert. Anschließend wurde bei vermindertem Druck (< 5 mbar) und einer maximalen Innentemperatur von 250°C 1,4-Butandiol abdestilliert. Der Polyester wurde ausgegossen und nach Abkühlen analysiert. Der erhaltene Polyester wies eine Viskositätszahl von 165 mL/g auf.

### Beispiel 3: (PBSSe (S : Se = 9B : 4)):

Ein Gemisch aus Butandiol (91,1 g, 130 mol-%), Bernsteinsäure (88,2 g, 96 mol-%), Sebacinsäure (6,3 g, 4 mol-%) und Glycerin (0,19 g, 0,1 Gew.-%) wurde in Anwesenheit von TBOT (0.2 g) zunächst auf 200 °C erhitzt. Die Schmelze wurde während 80 min auf dieser Temperatur gehalten und Wasser abdestilliert. Anschließend wurde bei vermindertem Druck (< 5 mbar) und einer maximalen Innentemperatur von 250°C 1,4-Butandiol abdestilliert. Der Polyester wurde ausgegossen und nach Abkühlen analysiert. Der erhaltene Polyester wies eine Viskositätszahl von 208 mL/g auf.

### Beispiel 4: (PBSSe (S : Se = 94 : 6)):

Ein Gemisch aus Butandiol (90,9 g, 130 mol-%), Bernsteinsäure (86,1 g, 94 mol-%), Sebacinsäure (9,4 g, 6 mol-%) und Glycerin (0,19 g, 0,1 Gew.-%) wurde in Anwesenheit von TBOT (0.2 g) zunächst auf 200 °C erhitzt. Die Schmelze wurde während 80 min auf dieser Temperatur gehalten und Wasser abdestilliert. Anschließend wurde bei vermindertem Druck (< 5 mbar) und einer maximalen Innentemperatur von 250°C 1,4-Butandiol abdestilliert. Der Polyester wurde ausgegossen und nach Abkühlen analysiert. Der erhaltene Polyester wies eine Viskositätszahl von 220 mL/g auf.

### Beispiel 5: (PBSSe (S : Se = 92 : 8)):

Ein Gemisch aus Butandiol (88,7 g, 130 mol-%), Bernsteinsäure (82,2 g, 92 mol-%), Sebacinsäure (12,2 g, 8 mol-%) und Glycerin (0,19 g, 0,1 Gew.-%) wurde in Anwesenheit von TBOT (0.2 g) zunächst auf 200°C erhitzt. Die Schmelze wurde während 80 min auf dieser Temperatur gehalten und Wasser abdestilliert. Anschließend wurde bei vermindertem Druck (< 5 mbar) und einer maximalen Innentemperatur von 250°C 1,4-Butandiol abdestilliert. Der Polyester wurde ausgegossen und nach Abkühlen analysiert. Der erhaltene Polyester wies eine Viskositätszahl von 169 mL/g auf.

### Beispiel 6*: (PBSSe (S : Se = 90 : 10) nicht erfindungsgemäß):

Ein Gemisch aus Butandiol (87,5 g, 130 mol%), Bernsteinsäure (79.4 g, 90 mol-%), Sebacinsäure (15.1 g, 10 mol-%) und Glycerin (0,18g, 0,1 Gew.-%) wurde in Anwesenheit von TBOT (0.2 g) zunächst auf 200°C erhitzt. Die Schmelze wurde während 80 min auf dieser Temperatur gehalten und Wasser abdestilliert. Anschließend wurde bei vermindertem Druck (< 5 mbar) und einer maximalen Innentemperatur von 250°C 1,4-Butandiol abdestilliert. Der Polyester wurde ausgegossen und nach Abkühlen analysiert. Der erhaltene Polyester wies eine Viskositätszahl von 252 mL/g auf.

**Tabelle 1: Thermische Eigenschaften (DSC)**

| Beispiel | PBSSe (S : Se) | T_{g}[°C] | Tₘ[°C] | T_{c}[°C] | HWB [°C] | · H₁ [J/g] | · H₂ [J/g] |
|---|---|---|---|---|---|---|---|
| V-1 | 100 : 0 | -35 | 112,5 | 64,7 | 10 | 85 | 83 |
| 2 | 98 : 2 | -39 | 111,0 | 72,5 | 6 | 93 | 82 |
| 3 | 96 : 4 | -39 | 108,4 | 61,5 | 8 | 85 | 77 |
| 4 | 94 : 6 | -41 | 106,6 | 57,4 | 8 | 79 | 74 |
| 5 | 92 : 8 | -43 | 103,9 | 59,8 | 4 | 80 | 72 |
| 6* | 90 : 10 | -45 | 101,9 | 57,1 | 5 | 77 | 71 |

**Tabelle 2: Wärmeformbeständigkeit (Vicat A)**

| Beispiel | PBSSe (S : Se) | Vicat A [°C] |
|---|---|---|
| V-1 | 100 : 0 | 105 |
| 2 | 98 : 2 | 104 |
| 3 | 96 : 4 | 102 |
| 4 | 94 : 6 | 102 |
| 5 | 92 : 8 | 98 |
| 6* | 90 : 10 | 99 |

**Tabelle 3: Mechanische Eigenschaften**

| Beispiel | PBSSe (S : Se) | E-Modul [MPa] | Streckspannung [MPa] | Reißdehnung [%] | Schädigungskraft [N] |
|---|---|---|---|---|---|
| V-1 | 100 : 0 | 569 | 30,6 | 268 | 54,1 |
| 2 | 98 : 2 | 511 | 511 58,6 | 511 58,6 | 58,6 |
| 3 | 96 : 4 | 459 | 31,2 | 271 | 51,7 |
| 4 | 94 : 6 | 432 | 29,1 | 264 | 51,2 |
| 5 | 92 : 8 | 414 | 28,9 | 168 | 47,9 |
| 6* | 90 : 10 | 375 | 25,6 | 407 | 47,0 |

Die Abbauraten wurden wie eingangs des experimentellen Teils beschrieben ermittelt. Es wurden absolute, untereinander vergleichbare Geschwindigkeiten erhalten. Wie aus Tabelle 4 ersichtlich wird, wird durch Einbau von Sebacinsäure die Abbaugeschwindigkeit deutlich erhöht.

**Tabelle 4 - Abbaugeschwindigkeiten unterschiedlicher PBSSe Copolyester.**

| Beispiel | PBSSe, mol% Se | Abbaurate absolut [µg/cm²d] | Abbaurate relativ |
|---|---|---|---|
| V-1 | 0 | 31 | 100% |
| 3 | 4 | 81 | 260% |
| 4 | 6 | 110 | 355% |
| 6* | 10 | 166 | 535% |

## Patentansprüche

1. Copolymere erhältlich durch Kondensation von
i) 92 bis 98 mol %, bezogen auf die Komponenten i bis ii, Bernsteinsäure;
ii) 2 bis 8 mol %, bezogen auf die Komponenten i bis ii, Azelainsäure, Sebazinsäure und/oder Brassylsäure;
iii) 98 bis 102 mol %, bezogen auf die Komponenten i bis ii, 1,3 Propandiol oder 1,4-Butandiol und
iv) 0,01 bis 5 Gew.-°/°, bezogen auf das Gesamtgewicht der Komponenten i bis iii, eines Vernetzers iva ausgewählt aus der Gruppe bestehend aus: Weinsäure, Zitronensäure, Äpfelsäure, Trimethylolpropan, Trimethylolethan, Pentaerythrit, Polyethertriole, Glycerin, Trimesinsäure, Trimellitsäure, Trimellitsäureanhydrid, Pyromellitsäure und Pyromellitsäureanhydrid und/oder Kettenverlängerers ivb ausgewählt aus der Gruppe bestehend aus: einem difunktionellen Isocyanat, Isocyanurat, Oxazolin und Epoxid.

2. Copolymere nach Anspruch 1, enthaltend
iva) 0,05 bis 0,5 Gew.-%, bezogen auf das Gesamtgewicht der Komponenten i bis ii, eines Vernetzers.

3. Copolymere nach Anspruch 1, enthaltend
ivb) 0,35 bis 2 Gew.-%, bezogen auf das Gesamtgewicht der Komponenten i bis iii, eines Kettenverlängerers.

4. Copolymere nach Ansprüche 1 , enthaltend Glycerin als Vernetzer iva).

5. Copolymere nach Ansprüche 1 , enthaltend 1,6-Hexamethylendiisocyanat als Kettenverlängerer ivb).

6. Copolymermischung, enthaltend
- 5 bis 95 Gew.-% eines Copolymer gemäß den Ansprüchen 1 bis 5 und
- 95 bis 5 Gew.-% eines Polymers ausgewählt aus der Gruppe bestehend aus: Polymilchsäure, Polycaprolacton, Polyhydroxyalkanoat, aliphatischem Polycarbonat, Chitosan, Gluten und eines aliphatischen Polyesters wie Polybutylensuccinat oder Polybulylensuccinat-adipat.
- 0 bis 2 Gew.-% eines Verträglichkeitsvermittlers.

7. Verfahren zur Herstellung von Copolymeren gemäß Anspruch 1 und 3, durch Kondensation der Komponenten i) bis iii) zu einem Präpolyester mit einer Viskositätszahl (VZ) von 50 bis 100 mL/g und anschließende Kettenverlängerung mit Diisocyanaten oder mit epoxidhaltigen Poly(meth)acrylaten zu einem Polyester mit einer Viskositätszahl von 100 bis 450 mL/g.

8. Verwendung der Copolymere gemäß den Ansprüchen 1 bis 5 und der Copolymermischungen gemäß Anspruch 6 zur Herstellung von Klebern, Dispersionen und Formteilen, extrudierten Schäumen, Partikelschäumen, Netzen und Folien.

9. Verwendung der Copolymere gemäß den Ansprüchen 1 bis 5 und der Copolymermischungen gemäß Anspruch 6 zur Herstellung von spritzgegossenen Formteilen wie Cateringbesteck, Teller, Tiegel, wiederbefüllbare Behälter und Verschlüsse und Pflanzentöpfe.

10. Verwendung der Copolymere gemäß den Ansprüchen 1 bis 5 und der Copolymermischungen gemäß Anspruch 6 zur Herstellung von extrusionsgeblasenen oder spritz-streckgeblasenen Formteilen wie Flaschen, Folienanwendungen für Inliner, Schwergutsäcke, Tragetaschen, Gefrierbeutel.

## Claims

1. A copolymer obtainable by condensation of
i) 92 to 98 mol%, based on components i to ii, of succinic acid;
ii) 2 to 8 mol%, based on components i to ii, of azelaic acid, sebacic acid and/or brassylic acid;
iii) 98 to 102 mol%, based on components i to ii, of 1,3-propanediol or 1,4-butanediol, and
iv) 0.01% to 5% by weight, based on the total weight of said components i to iii, of a crosslinker iva selected from the group consisting of tartaric acid, citric acid, malic acid, trimethylolpropane, trimethylolethane, pentaerythritol, polyethertriols, glycerol, trimesic acid, trimellitic acid, trimellitic anhydride, pyromellitic acid and pyromellitic anhydride and/or a chain extender ivb selected from the group consisting of a difunctional isocyanate, isocyanurate, oxazoline and epoxide.

2. The copolymer according to claim 1 comprising:
iva) 0.05% to 0.5% by weight, based on the total weight of said components i to ii, of a crosslinker.

3. The copolymer according to claim 1 comprising
ivb) 0.35% to 2% by weight, based on the total weight of said components i to iii, of a chain extender.

4. The copolymer according to claim 1 comprising glycerol as said crosslinker iva).

5. The copolymer according to claim 1 comprising 1,6-hexamethylene diisocyanate as chain extender ivb).

6. A copolymer blend comprising
- 5% to 95% by weight of a copolymer according to claims 1 to 4 and
- 95% to 5% by weight of a polymer selected from the group consisting of polylactic acid, polycaprolactone, polyhydroxyalkanoate, aliphatic polycarbonate, chitosan, gluten and an aliphatic polyester such as polybutylene succinate or polybutylene succinate adipate,
- 0% to 2% by weight of a compatibilizer.

7. The process for producing copolymers according to claim 1 and 3 by condensation of said components i) to iii) to form a prepolyester having a viscosity number (VN) of 50 to 100 mL/g and subsequent chain extension with diisocyanates or with epoxy-containing poly(meth)acrylates to form a polyester having a viscosity number of 100 to 450 mL/g.

8. The use of the copolymers according to claims 1 to 5 and of the copolymer blends according to claim 5 in the production of adhesives, dispersions and moldings, extruded foams, bead foams, nets and self-supporting film/sheet.

9. The use of the copolymers according to claims 1 to 5 and of the copolymer blends according to claim 5 in the production of injection moldings such as catering cutlery, plates, tiles, refillable containers and closures and plant pots.

10. The use of the copolymers according to claims 1 to 5 and of the copolymer blends according to claim 5 in the production of extrusion-blown or injection stretch blown moldings such as bottles, film applications for inliners, flexible intermediate bulk containers, carrier bags, freezer bags.

## Revendications

1. Copolymères pouvant être obtenus par condensation de
i) 92 à 98 % en moles, par rapport aux composants i à ii, d'acide succinique ;
ii) 2 à 8 % en moles, par rapport aux composants i à ii, d'acide azélaïque, d'acide sébacique et/ou d'acide brassylique ;
iii) 98 à 102 % en moles, par rapport aux composants i à ii, de 1,3-propanediol ou de 1,4-butanediol, et
iv) 0,01 à 5 % en poids, par rapport au poids total des composants i à iii, d'un agent de réticulation iva choisi dans le groupe constitué par : l'acide tartrique, l'acide citrique, l'acide malique, le triméthylolpropane, le triméthyloléthane, la pentaérythrite, les polyéther-triols, la glycérine, l'acide trimésique, l'acide triméllitique, l'anhydride de l'acide triméllitique, l'acide pyroméllitique et l'anhydride de l'acide pyroméllitique, et/ou d'un allongeur de chaînes ivb choisi dans le groupe constitué par : un isocyanate bifonctionnel, un isocyanurate, l'oxazoline et un époxyde.

2. Copolymères selon la revendication 1, contenant :
iva) 0,05 à 0,5 % en poids, par rapport au poids total des composants i à ii, d'un agent de réticulation.

3. Copolymères selon la revendication 1, contenant :
ivb) 0,35 à 2 % en poids, par rapport au poids total des composants i à iii, d'un allongeur de chaînes.

4. Copolymères selon la revendication 1, contenant :
de la glycérine en tant qu'agent de réticulation iva).

5. Copolymères selon la revendication 1, contenant :
du diisocyanate de 1,6-hexaméthylène en tant qu'allongeur de chaînes ivb).

6. Mélange de copolymères, contenant :
- 5 à 95 % en poids d'un copolymère selon les revendications 1 à 5 et
- 95 à 5 % en poids d'un polymère choisi dans le groupe constitué par : l'acide polylactique, la polycaprolactone, le polyhydroxyalcanoate, le polycarbonate aliphatique, le chitosan, le gluten et un polyester aliphatique tel que le polysuccinate de butylène ou le polysuccinate-adipate de butylène,
- 0 à 2 % en poids d'un promoteur de compatibilité.

7. Procédé de fabrication de copolymères selon les revendications 1 et 3, par condensation des composants i) à iii) en un pré-polyester ayant un indice de viscosité (VZ) de 50 à 100 ml/g, puis allongement de chaînes avec des diisocyanates ou avec des poly(méth)acrylates contenant un époxyde en un polyester ayant un indice de viscosité de 100 à 450 ml/g.

8. Utilisation des copolymères selon les revendications 1 à 5 et des mélanges de copolymères selon la revendication 6 pour la fabrication de colles, de dispersions et de pièces moulées, de mousses extrudées, de mousses particulaires, de réseaux et de films.

9. Utilisation des copolymères selon les revendications 1 à 5 et des mélanges de copolymères selon la revendication 6 pour la fabrication de pièces moulées par injection telles que des couverts de restauration, des assiettes, des coupelles, des contenants rechargeables et des bouchons et des pots à plantes.

10. Utilisation des copolymères selon les revendications 1 à 5 et des mélanges de copolymères selon la revendication 6 pour la fabrication de pièces moulées par extrudo-gonflage ou par injection-gonflage avec étirage telles que des bouteilles, des applications de films pour garnitures intérieures, des sacs pour matériaux lourds, des sacs de transport, des sacs congélation.
